(19) Europäisches Patentamt

European Patent Office

Office européen des brevets

(11) Veröffentlichungsnummer: **0 229 258**

**A2**

(12) # EUROPÄISCHE PATENTANMELDUNG

(21) Anmeldenummer: 86115813.7

(51) Int. Cl.⁴: **B60R 22/42** , B60R 22/24

(22) Anmeldetag: 14.11.86

Die Bezeichnung der Erfindung wurde geändert (Richtlinien für die Prüfung im EPA, A-III, 7.3).

(30) Priorität: 18.11.85 DE 3540868

(43) Veröffentlichungstag der Anmeldung:
22.07.87 Patentblatt 87/30

(84) Benannte Vertragsstaaten:
AT BE DE ES FR GB IT NL SE

(71) Anmelder: **Firma Griesemer GmbH
Metallwaren und Kunststoffverarbeitung
Industriegebiet Sainscheid
D-5438 Westerburg(DE)**

(72) Erfinder: **Gercken, Karl
Eichleite 16
D-3022 Grünwald(DE)**

(74) Vertreter: **Grommes, Karl F., Dr.
Mehlstrasse 14-16
D-5400 Koblenz(DE)**

(54) **Gurtbandklemmvorrichtung für einen Sicherheitsgurt.**

(57) Gurtbandstrammvorrichtung für einen Sicherheitsgurt, die durch einen am Gurtumlenkring - schwenkbar gelagerten, mit dem Gurtumlenkring in den Gurtumlenkringschlitz zur Klemmung des Gurts schwenkbaren Klemmhebel gekennzeichnet ist.

Fig. 2

Fig. 1

## Gurtbandstrammvorrichtung für einen Sicherheitsgurt

Technisches Gebiet

Die Erfindung betrifft eine Strammvorrichtung für das Gurtband eines Sicherheitsgurtes, z. B. eines Kraftfahrzeuges.

Stand der Technik

Bei Sicherheitsgurten rutscht im Falle eines Unfalles das Gurtband 100 bis 200 mm durch die obere Gurtumlenkung. Dies bedeutet eine zusätzliche Verlagerung der angeschallten Person. Das Durchrutschen wird nach dem Stand der Technik mit einem elektro/pyrotechnischen Gurtstrammer verhindert. Diese Vorrichtung ist aufwendig und teuer.

Darstellung der Erfindung

Aufgabe der Erfindung ist, eine einfache, preiswerte und dennoch sichere Gurtbandstrammvorrichtung zu schaffen.

Diese Aufgabe wird durch die Merkmale des Hauptanspruchs gelöst. Vorteilhafte Ausführungsformen der Erfindung werden in den Unteransprüchen gekennzeichnet.

Kurze Beschreibung der Zeichnung

Anhand der Zeichnung wird die Erfindung beispielhaft näher erläutert. Es zeigen:

Fig. 1 eine Explosionszeichnung der Gurtbandstrammvorrichtung,

Fig. 2 einen Querschnitt durch die Gurtbandstrammvorrichtung.

Die dargestellte Gurtbandstrammvorrichtung weist einen Gurtumlenkring 1 auf, bestehend aus einer gestanzten Blechscheibe 2 mit einer Kunststoffbeschichtung 3 in der unteren Hälfte der Blechscheibe 2 und einem Befestigungsloch 4 in der oberen Hälfte sowie einem querverlaufenden Schlitz 11 unterhalb des Befestigungslochs 4. Sie weist ferner einen Klemmhebel 6, zwei Blattfedern 9, eine Lagerbuchse 5 und eine Befestigungsschraube 8 sowie eine Kunststoffkappe 10, die lediglich zum Schutz der Vorrichtung dient, auf.

Die Blechscheibe 2 ist in der Draufsicht etwa halbkreisförmig, kann aber auch andere geeignete Flächenformen aufweisen. Der Schlitz 11 ist horizontal und etwa in der Flächenmitte eingebracht. Durch den Schlitz 11 wird in an sich bekannter Weise das Gurtband 12 geführt und umgelenkt. Oberhalb des Schlitzes 11 ist das Befestigungsloch 4 eingestanzt mit einer trichterförmigen, nach unten weisenden Erweiterung 13. Wesentlich ist, daß ein ringförmiger Randbereich 14 um das Befestigungsloch 4 herum nach hinten sickenförmig durchgedrückt ist, wobei dieser Bereich bis in die Oberkante des Schlitzes 11 reicht und dort etwa so breit ist, wie der Schlitz 11 lang ist. Die Ebene des Randbereichs 14 bildet mit der Ebene der Blechscheibe 2 einen spitzen Winkel $\alpha$. Die im Querschnitt vorzugsweise ovale Kunststoffbeschichtung 3 umgibt den Bereich unterhalb des Schlitzes 11 und die Unterkante des Schlitzes 11. Oberhalb der waagerecht verlaufenden Oberkante 15 der Blechscheibe 2 ist beidseitig ein seitlich überstehender Lagerzapfen 16 einstückig angeordnet, der sich parallel zur Oberkante 15 erstreckt. Zwischen den beiden Lagerzapfen 16 befindet sich ein nach oben ragender bogenförmiger Materialsteg 17, dessen Kulminationspunkt 18 sich über dem Befestigungsloch 4 befindet.

Der Klemmhebel 6 ist ein im Querschnitt C-förmig gebogenes Blechstanzteil mit den beiden Querstegwandungen 19, 20 und der Längsstegwandung 21, wobei die Querstegwandungen rechtwinklig nach vorne abgebogen sind. Die Querstegwandung 19 weist ein Langloch 22 in ihrer Längserstreckung auf. An den Querseiten der Querstegwandung 19 ist je ein Lagerlappen 23 mit einem Loch 24 rechtwinklig nach unten bzw. in Richtung Querstegwandung 20 abgebogen. In der Längsstegwandung 21 ist eine rechteckige Öffnung 25 eingebracht, so daß sich zwei Seitenstege 26 ergeben.

Die zylindrische Lagerbuchse 5 hat ein Durchgangsloch 27, einen Zylindersteg 28 und einen Zylinderrand 29 größeren Durchmessers. Der Außendurchmesser des Zylinderstegs 28 entspricht dem Durchmesser des Befestigungslochs 4 der Blechscheibe 2.

Die Befestigungsschraube 8 ist eine normale Kopfschraube mit einem Sechskantkopf 30 und einem Gewindestift 31, dessen Durchmesser dem Durchmesser des Durchganglochs 27 entspricht.

Die beiden gleich ausgebildeten Blattfedern 9 aus einem Federstahlblechstreifen weisen einen, von der Seite betrachtet, halbkreisförmigen Federbogen 32 und beiderseits davon einen ebenen Abstützsteg 33a, 33 auf.

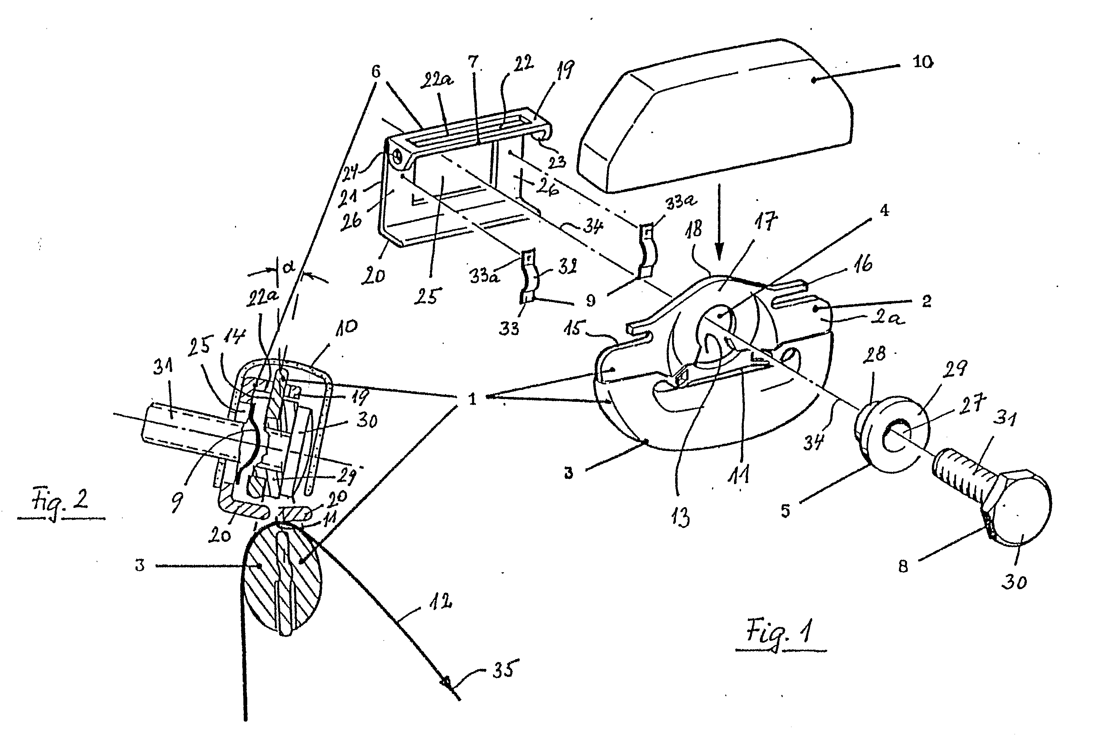

Die Montage der Einzelteile verdeutlicht die Strichlinierung 34 in Fig. 1. Der montierte Zustand ergibt sich aus Fig. 2. Demnach wird der Zylindersteg 28 in das Befestigungsloch 4 gesteckt, bis der Zylinderrand 29 an dem Randbereich 14 anliegt.

Dann wird der Gewindestift 31 durch das Durchgangsloch 27 geschoben, bis der Schraubenkopf 30 am Zylinderrand 29 anliegt. Von der anderen Seite wird der Klemmhebel 6 montiert, indem die Lagerzapfen 16 in die Löcher 24 der Lappen 23 gesteckt werden, wobei der Materialsteg 17 das Langloch 22 und der Schraubenschaft 31 die Öffnung 25 durchgreifen. Die Dimensionierung der Zapfen 16 und der Löcher 24 ist derart, daß daraus eine freie Verschwenkbarkeit des Schwenkhebels 6 resultiert. Auf den Seitenstegen 26 werden die Blattfedern 9 befestigt, indem z. B. die oberen Abstützstege 33a dort aufgeklebt, aufgelötet, aufgeschweißt oder aufgeschraubt werden. Dabei liegen die Federbögen an den Seitenflanken 2a der Blechscheibe 2 an und halten den Klemmhebel 6 auf Abstand.

Aufgrund der abgewinkelten Raumform des Randbereiches 14 (Winkel α) und der Länge der Längsstegwandung 21 endet der vordere Rand der Wandung 20 kurz vor dem Schlitz 11 und kurz über dem Gurt 12 (Fig. 2).

In diesem montierten Zustand wird die Gurtbandstrammvorrichtung an z.B. ein Karosserieteil eines Kraftfahrzeugs geschraubt, so daß die Längsstegwandung 21 am Karosserieteil anliegt. Wenn nun eine ruckartige, kräftige Zugkraft in Richtung des Pfeiles 35 ausgeübt wird, dann stößt der Materialsteg 17 gegen die Hinterkante 22a des Langlochs 22 und verschwenkt den Klemmhebel 6 gegen den Druck der Feder 9, so daß die untere Querstegwandung 20 mit dem Gurt 12 in Kontakt kommt, auf ihn gepreßt wird und durch Reibschluß ein weiteres Durchlaufen des Gurtes 12 in Richtung des Pfeiles 35 verhindert.

Von besonderem Vorteil ist, daß aufgrund der beschriebenen Raumform der Klemmhebel 6 eine Schwenkbewegung ausführt, so daß die Wandung 20 sich auf einem Kreisbogen bewegt und auf den Gurt eine steigende Preßkraft ausübt, je weiter der Klemmhebel 6 verschwenkt wird. Dabei wird der Abstand der Wandung 20 zum Gurt 12 so gewählt, daß Preßkräfte entstehen, die den Gurt 12 derart festklemmen, daß kein Durchrutschen durch den Spalt zwischen der Wanderung 20 und der Oberfläche des Kunststoffteils 3 im Spalt 11 möglich ist.

## Ansprüche

1. Gurtbandstrammvorrichtung für einen Sicherheitsgurt, **gekennzeichnet durch** einen am Gurtumlenkring (1) schwenkbar gelagerten, mit dem Gurtumlenkring (1) in den Gurtumlenkringschlitz (11) zur Klemmung des Gurts (12) schwenkbaren Klemmhebel (6).

2. Gurtbandstrammvorrichtung nach Anspruch 1, **dadurch gekennzeichnet,** daß der Gurtumlenkring (1) aus einer Bleckscheibe (2) besteht, in der der Gurtumlenkringschlitz (11) horizontal erwa in der Flächenmitte eingebracht ist, wobei oberhalb des Schlitzes (11) ein Befestigungsloch (4) mit einer trichterförmigen, nach unten weisenden Erweiterung (13) angeordnet ist und wobei ein Randbereich (14) um das Befestigungsloch (4) herum nach hinten sickenförmig durchgedrückt ist, der bis in die Oberkante des Schlitzes (11) reicht und mit der Ebene der Blechscheibe (2) einen spitzen Winkel bildet.

3. Gurtbandstrammvorrichtung nach Anspruch 1, **dadurch gekennzeichnet,** daß die Blechscheibe (2) seitlich überstehende Lagerzapfen (16) aufweist und sich zwischen den Lagerzapfen (16) ein nach oben ragender Materialsteg (17) befindet.

4. Gurtbandstrammvorrichtung nach einem oder mehreren der Ansprüche 1 bis 3, **dadurch gekennzeichnet,** daß der Klemmhebel (6) ein im Querschnitt C-förmig gebogenes blechstanzteil mit den beiden Querstegwandungen (19, 20) und der Längsstegwandung (21) ist, wobei die Querstegwandungen rechtwinklig nach vorne abgebogen sind und die Querstegwandung (19) ein Langloch - (22) aufweist, an den Querseiten der Querstegwandung (19) je ein Lagerlappen (23) mit einem Loch - (24) rechtwinklig nach unten abgebogen ist, in der Längsstegwandung (21) eine rechteckige Öffnung (25) eingebracht ist und daß die Lagerzapfen (16) Löcher(24) der Lappen (23) durchgreifen.

5. Gurtbandstrammvorrichtung nach einem oder mehreren der Ansprüche 1 bis 4, **dadurch gekennzeichnet,** daß eine zylindrische Lagerbuchse (5) mit einem Durchgangsloch (27), einem Zylindersteg (28) und einem Zylinderrand (29) mit dem Zylindersteg (28) im Befestigungsloch (4) der Blechscheibe (2) sitzt und eine Befestigungsschraube (8) mit ihrem Gewindestift (31) das Durchgangsloch (27) durchgreift.

6. Gurtbandstrammvorrichtung nach einem oder mehreren der Ansprüche 1 bis 5, **dadurch gekennzeichnet,** daß die Längsstegwandung (21) durch Federkraft von der Blechscheibe (2) auf Abtand gehalten wird.

7. Gurtbandstrammvorrichtung nach Anspruch 6, **dadurch gekennzeichnet,** daß die Federkraft von zwei Blattfedern (9) gewährleistet wird, die aus einem Federstahlblechstreifen bestehen, einen von der Seite betrachtet halbkreisförmigen Federbogen (32) und beiderseits davon einen ebenen Abstützsteg (33a, 33) aufweisen, wobei der Federbogen (32) gegen die Blechscheibe (2) drückt und die Blattfedern (9) sich mit ihren Abstützstegen (33a, 33) gegen die Längsstegwandung (21) abstützen.

0 229 258

_Fig. 2_

_Fig. 1_